# EUROPEAN PATENT APPLICATION

(11) **EP 4 131 811 A1**
(43) Date of publication of application: **08.02.2023**
(21) Application number: 22188619.5
(22) Date of filing: 03.08.2022
(51) Int. Cl.: H04L 1/00, H04B 7/06

(54) **METHOD AND USER EQUIPMENT FOR BEAM GROUP REPORTING IN MOBILE COMMUNICATIONS**

(30) Priority: 04.08.2021 US 202163229107 P; 15.06.2022 US 202217840860
(71) Applicant: MediaTek Inc., Hsinchu City 30078 (TW)
(72) Inventor: TSAI, Cheng-Rung, Hsinchu City (TW)
(74) Representative: Patentship Patentanwaltsgesellschaft mbH

(57) **Abstract**

The network node (101) may transmit the report configuration to the user equipment (102), UE. The UE (102) may determine at least one resource group based on the report configuration and report a report comprising the resource group or resource groups to the network node (101). The report may comprise an indicator to indicate that a first resource index in the report is associated with the first resource set or the second resource set. The network node (101) may know that the first resource index of the report is associated with which resource set based on the indicator in the report.

## Description

### TECHNICAL FIELD

The disclosed embodiments relate generally to wireless communication, and, more particularly, to beam group reporting in mobile communications.

### BACKGROUND

The wireless communications network has grown exponentially over the years. A long-term evolution (LTE) system offers high peak data rates, low latency, improved system capacity, and low operating cost resulting from simplified network architecture. LTE systems, also known as the 4G system, also provide seamless integration to older wireless network, such as GSM, CDMA and universal mobile telecommunication system (UMTS). In LTE systems, an evolved universal terrestrial radio access network (E-UTRAN) includes a plurality of evolved Node-Bs (eNodeBs or eNBs) communicating with a plurality of mobile stations, referred to as user equipments (UEs). The 3^{rd} generation partner project (3GPP) network normally includes a hybrid of 2G/3G/4G systems. The next generation mobile network (NGMN) board, has decided to focus the future NGMN activities on defining the end-to-end requirements for 5G new radio (NR) systems.

In conventional technology, for beam group reporting, when the network receives a reporting instance from the UE, the network cannot know that each reported resource index in the reporting instance is associated with which resource set.

### SUMMARY

A first aspect of the invention provides a method, comprising: receiving, by a user equipment (UE), a report configuration from a network node, wherein the report configuration is associated with a first resource set and a second resource set; determining, by the UE, at least one resource group, wherein each resource group comprises two reference-signal (RS) resources respectively corresponding to the first resource set and the second resource set; and transmitting, by the UE, a report comprising the at least one resource group to the network node, wherein the report further comprises an indicator indicating that a first resource index in the report is associated with the first resource set or the second resource set.

In a first embodiment of the first aspect, in an event that the indicator corresponds to a first value, the first resource index in the report is associated with the first resource set, and in another event that the indicator corresponds to a second value, the first resource index in the report is associated with the second resource set.

In a second embodiment of the first aspect, the first resource index in the report corresponds to the largest RSRP value or SINR value in the report.

In a third embodiment of the first aspect in combination with the second embodiment of the first aspect, a resource index other than the first resource index in the report corresponds to a corresponding differential value based on the largest RSRP value or SINR value.

In a fourth embodiment of the first aspect, in an event that a periodic or semi-persistent resource configuration is associated with the report configuration, at least one resource set list in the periodic or semi-persistent resource configuration indicates a first resource set ID and a second resource set ID respectively corresponding to the first resource set and the second resource set.

In a fifth embodiment of the first aspect, the report configuration is associated with a report trigger state configuration, and the report trigger state configuration indicates a first index and a second index respectively corresponding to the first resource set and the second resource set.

In a sixth embodiment of the first aspect, the UE is capable to simultaneously receive the RS resources in each resource group.

In a seventh embodiment of the first aspect, in the report, a reporting order associated with one resource group other than the resource group including the first resource index in the report is that the resource index associated with the first resource set is reported first, and then the resource index associated with the second resource set is reported.

In an eighth embodiment of the first aspect, in the report, a reporting order associated with one resource group other than the resource group including the first resource index is that the resource index associated with a smaller resource set ID is reported first, and then the resource index associated with a larger resource set ID is reported.

In a ninth embodiment of the first aspect, in the report, a reporting order associated with one resource group other than the resource group including the first resource index follows the reporting order associated with the resource group including the first resource index.

A second aspect of the invention provides a user equipment (UE), comprising: a receiver, receiving a report configuration from a network node, wherein the report configuration is associated with a first resource set and a second resource set; a processor, determining at least one resource group, wherein each resource group comprises two reference-signal (RS) resources respectively corresponding to the first resource set and the second resource set; and a transmitter, transmitting a report comprising the at least one resource group to the network node, wherein the report further comprises an indicator indicating that a first resource index in the report is associated with the first resource set or the second resource set.

In a first embodiment of the second aspect, in an event that the indicator corresponds to a first value, the first resource index in the report is associated with the first resource set, and in another event that the indicator corresponds to a second value, the first resource index in the report is associated with the second resource set.

In a second embodiment of the second aspect, the first resource index in the report corresponds to the largest RSRP value or SINR value in the report.

In a third embodiment of the second aspect in combination with the second embodiment of the second aspect, a resource index other than the first resource index in the report corresponds to a corresponding differential value based on the largest RSRP value or SINR value.

In a fourth embodiment of the second aspect, in an event that a periodic or semi-persistent resource configuration is associated with the report configuration, at least one resource set list in the periodic or semi-persistent resource configuration indicates a first resource set ID and a second resource set ID respectively corresponding to the first resource set and the second resource set.

In a fifth embodiment of the second aspect, the report configuration is associated with a report trigger state configuration, and the report trigger state configuration indicates a first index and a second index respectively corresponding to the first resource set and the second resource set.

In a sixth embodiment of the second aspect, the receiver is capable to simultaneously receives the RS resources in each resource group.

In a seventh embodiment of the second aspect, in the report, a reporting order associated with one resource group other than the resource group including the first resource index in the report is that the resource index associated with the first resource set is reported first, and then the resource index associated with the second resource set is reported.

In an eighth embodiment of the second aspect, in the report, a reporting order associated with one resource group other than the resource group including the first resource index is that the resource index associated with a smaller resource set ID is reported first, and then the resource index associated with a larger resource set ID is reported.

In a ninth embodiment of the second aspect, in the report, a reporting order associated with one resource group other than the resource group including the first resource index follows the reporting order associated with the resource group including the first resource index.

A beam group reporting method is proposed. The network node may transmit the report configuration to the user equipment (UE). The UE may determine at least one resource group based on the report configuration and may report a report comprising the resource group or resource groups to the network node. The report may comprise an indicator to indicate that a first resource index in the report is associated with the first resource set or the second resource set. The network node may know that the first resource index of the report is associated with which resource set based on the indicator in the report.

In one embodiment, the UE receives a report configuration from a network node, wherein the report configuration is associated with a first resource set and a second resource set. The UE determines at least one resource group, wherein each resource group comprises two reference-signal (RS) resources respectively corresponding to the first resource set and the second resource set. The UE transmits a report comprising the at least one resource group to the network node, wherein the report comprises an indicator indicating that a first resource index in the report is associated with the first resource set or the second resource set.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 is a simplified block diagram of a network node and a user equipment that carry out certain embodiments of the present invention.
Figure 2 illustrates an example of report.
Figure 3 illustrates another example of report.
Figure 4 illustrates another example of report.
Figure 5 is a flow chart of a beam group reporting method in accordance with one novel aspect.

### DETAILED DESCRIPTION

Reference will now be made in detail to some embodiments of the invention, examples of which are illustrated in the accompanying drawings.

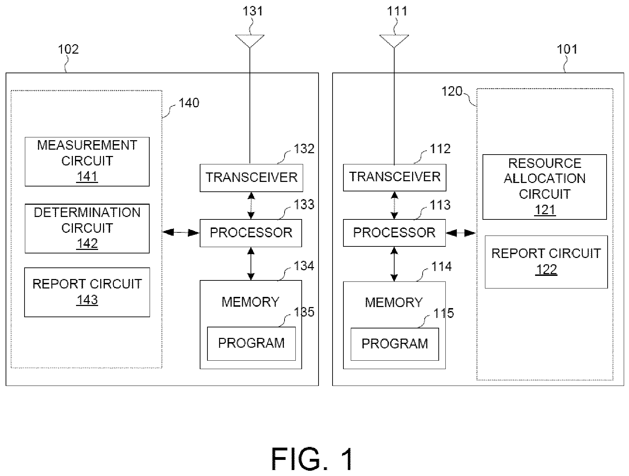

Figure 1 is a simplified block diagram of a network node and a user equipment (UE) that carry out certain embodiments of the present invention. The network node 101 may be a base station (BS) or a gNB, but the present invention should not be limited thereto. The UE 102 may be a smart phone, a wearable device, an Internet of Things (IoT) device, and a tablet, etc. Alternatively, UE 102 may be a Notebook (NB) or Personal Computer (PC) inserted or installed with a data card which includes a modem and RF transceiver(s) to provide the functionality of wireless communication.

Network node 101 has an antenna array 111 having multiple antenna elements that transmits and receives radio signals, one or more RF transceiver modules 112, coupled with the antenna array 111, receives RF signals from antenna array 111, converts them to baseband signal, and sends them to processor 113. RF transceiver 112 also converts received baseband signals from processor 113, converts them to RF signals, and sends out to antenna array 111. Processor 113 processes the received baseband signals and invokes different functional modules 120 to perform features in network node 101. Memory 114 stores program instructions and data 115 to control the operations of network node 101. Network node 101 also includes multiple function modules that carry out different tasks in accordance with embodiments of the current invention.

Similarly, UE 102 has an antenna array 131, which transmits and receives radio signals. A RF transceiver 132, coupled with the antenna, receives RF signals from antenna array 131, converts them to baseband signals and sends them to processor 133. RF transceiver 132 also converts received baseband signals from processor 133, converts them to RF signals, and sends out to antenna array 131. Processor 133 processes the received baseband signals and invokes different functional modules 140 to perform features in UE 102. Memory 134 stores program instructions and data 135 to control the operations of UE 102. UE 102 also includes multiple function modules and circuits that carry out different tasks in accordance with embodiments of the current invention.

The functional modules and circuits 120 and 140 can be implemented and configured by hardware, firmware, software, and any combination thereof. The function modules and circuits 120 and 140, when executed by the processors 113 and 133 (e.g., via executing program codes 115 and 135), allow network node 101 and UE 102 to perform embodiments of the present invention.

In the example of Figure 1, the network node 101 may comprise a resource allocation circuit 121 and a report circuit 122. Resource allocation circuit 121 may allocate a report configuration for the UE 102. Report circuit 122 may report the allocated report configuration to the UE 102.

In the example of Figure 1, the UE 102 may comprise a measurement circuit 141, a determination circuit 142 and a report circuit 143. Measurement circuit 141 may measure the Reference Signal Receiving Power (RSRP) or Signal-to-Interference-plus-Noise Ratio (SINR) values of the reference-signal (RS) resources in the report configuration from the network node 101. Determination circuit 142 may determine at least one resource group based on the report configuration from the network node 101 and the measurement result of the measurement circuit 141. Report circuit 143 may report a report (e.g. a reporting instance) comprising the resource group or resource groups to the network node 101.

In accordance with one novel aspect, the network node 101 may transmit the report configuration to the UE 102 through higher layer signaling. In an example, the network node 101 may transmit the report configuration to the UE 102 through a radio resource control (RRC) configuration.

In accordance with one novel aspect, the report configuration is associated a first resource set and a second resource set. In an example, a periodic or semi-persistent resource configuration is associated with the report configuration, and a resource set list in the periodic or semi-persistent resource configuration may indicate a first resource set ID and a second resource set ID respectively corresponding to the first resource set and the second resource set. In another example, the report configuration is associated with a report trigger state configuration, and the report trigger state configuration may indicate a first index and a second index respectively corresponding to the first resource set and the second resource set.

The first resource set and the second resource set may respectively comprise a plurality of RS resources. The RS resources may be Synchronization Signal Block (SSB) resources or channel-state-information (CSI)-RS resources. Each RS resource may have its resource index, e.g., SSB resource index (SSBRI) or CSI-RS resource index (CRI).

In accordance with one novel aspect, the determination circuit 142 may determine at least one resource group based on the RS resources of the report configuration from the network node 101 and the measurement result of the measurement circuit 141. Each resource group may comprise two RS resources respectively corresponding to the first resource set and the second resource set. Specifically, for each resource group, the determination circuit 142 may select one RS resource from the first resource set and select the other RS resource from the second resource set. The RS resources in each resource group can be received simultaneously by the UE 102, i.e. the RS resources in the same resource group can be received simultaneously by the UE 102. In other words, the UE 102 is capable to simultaneously receive the RS resources in each resource group.

In accordance with one novel aspect, the report circuit 143 may transmit a report (e.g. a reporting instance) comprising the at least one resource group to the network node 101.

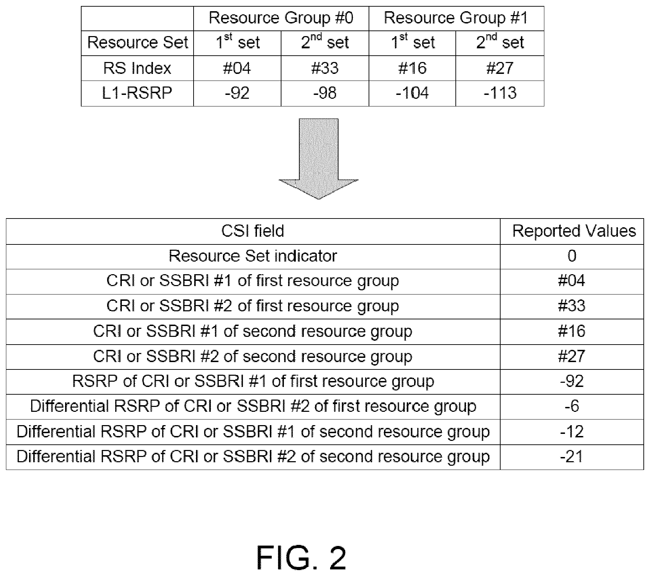

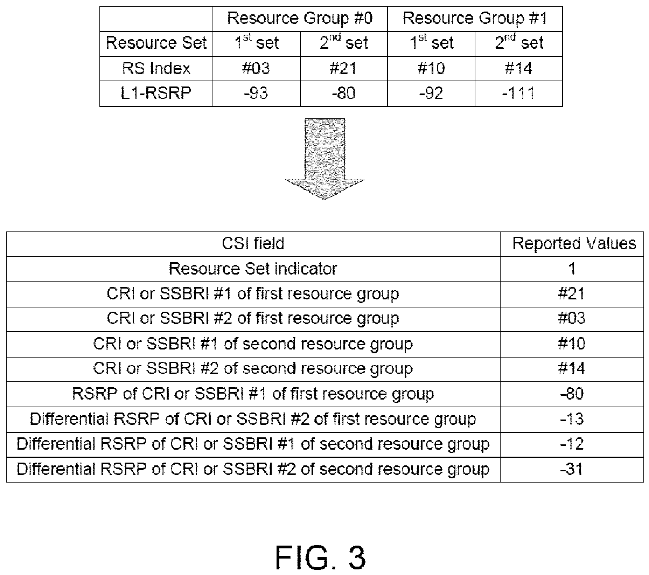

In accordance with one novel aspect, the report may comprise an indicator and the resource indexes associated with each resource group. The indicator may indicate that a first resource index in the report is associated with the first resource set or the second resource set. In an example, if the indicator corresponds to a first value, the first resource index in the report is associated with the first resource set, and if the indicator corresponds to a second value, the first resource index in the report is associated with the second resource set, wherein the first resource index in the report is regarded as the resource index reported first in the report. Taking FIG. 2 and FIG. 3 as an example, if the indicator value is 0, the first resource index in the report is associated with the first resource set and if the indicator value is 1, the first resource index in the report is associated with the second resource set. The network node 101 may know that the first resource index of the report is associated with which resource set based on the indicator in the report.

Furthermore, the report may further comprise the RSRP value or SINR value of the first resource index, and the differential values of other resource indexes. The first resource index in the report may correspond to the largest RSRP value or SINR value. Other resource indexes in the report may respectively correspond to a corresponding differential value. The differential values corresponding to other resource indexes in the report are calculated based on the largest RSRP value or SINR value corresponding to the first resource index in the report.

For example, as shown in FIG. 2, the determination circuit 142 may determine two resource groups, Resource Group #0 and Resource Group #1. The Resource Group #0 may comprise the RS resource with RS index #04 from the first resource set and the RS resource with RS index #33 from the second resource set. The Resource Group #1 may comprise the RS resource with RS index #16 from the first resource set and the RS resource with RS index #27 from the second resource set. The L1-RSRP value of RS resource with RS index #04 is - 92dBm, the L1-RSRP value of RS resource with RS index #33 is -98dBm, the L1-RSRP value of RS resource with RS index #16 is -104dBm and the L1-RSRP value of RS resource with RS index #27 is -113dBm. Because the RS resource with RS index #04 has the largest L1-RSRP value, the RS index #04 will be the first resource index in the report reported to the network node 101. The resource group associated with the RS index #04 will be the first resource group in the report. In addition, because the RS index #04 is associated with the first resource set, the indicator value is set to 0. The RS index #33 associated with the same resource group with the RS index #04 will be reported after the RS index #04 in the report. The RSRP value associated with RS index #04 is reported in the report. The differential values associated with RS index #33, RS index #16 and RS index #27 are reported in the report. The differential values associated with RS index #33, RS index #16 and RS index #27 are calculated based on the RSRP value associated with RS index #04, i.e. -98-(-92)=-6, - 104-(-92)=-12 and -113-(-92)=-21.

In accordance with one novel aspect, in the report, a reporting order associated with one resource group other than the resource group including the first resource index is that the resource index associated with the first resource set is reported first, and then the resource index associated with the second resource set is reported. Taking FIG. 3 for example, for the second resource group of the report, the resource index (RS index #10) associated with the first resource set is reported first, and then the resource index (RS index #14) associated with the second resource set is reported. The network node 101 may know that each resource index of the second resource group of the report is associated with which resource set based on the reporting order in the report.

In accordance with one novel aspect, in the report, a reporting order associated with one resource group other than the resource group including the first resource index is that the resource index associated with a smaller resource set ID is reported first, and then the resource index associated with a larger resource set ID is reported. Taking FIG. 3 for example, for the second resource group of the report, the resource index (RS index #10) may be associated with the smaller resource set ID is reported first, and then the resource index (RS index #14) may be associated with the larger resource set ID is reported. The network node 101 may know that each resource index of the second resource group of the report is associated with which resource set based on the reporting order in the report.

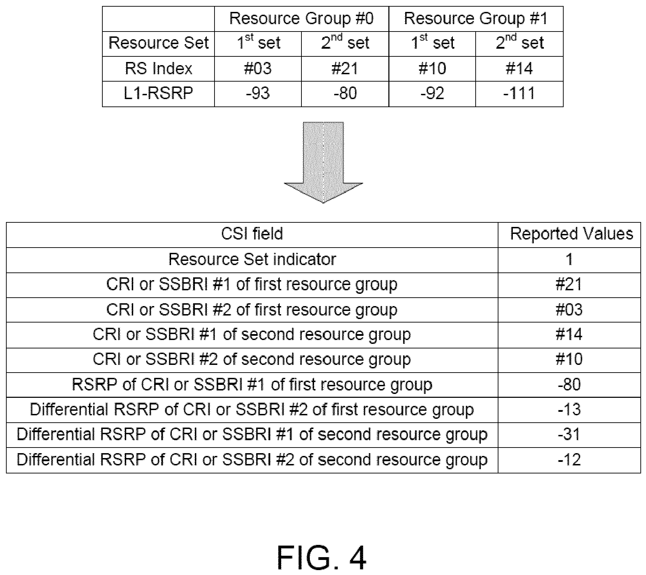

In accordance with one novel aspect, in the report, a reporting order associated with one resource group other than the resource group including the first resource index follows the reporting order associated with the resource group including the first resource index. Taking FIG. 4 for example, the reporting order of the second resource group of the report may follow the first resource group including the first resource index (RS index #21). Therefore, the resource index (RS index #14) associated with the second resource set is reported first, and then the resource index (RS index #10) associated with the first resource set is reported. The network node 101 may know that each resource index of the second resource group of the report is associated with which resource set based on the reporting order in the report.

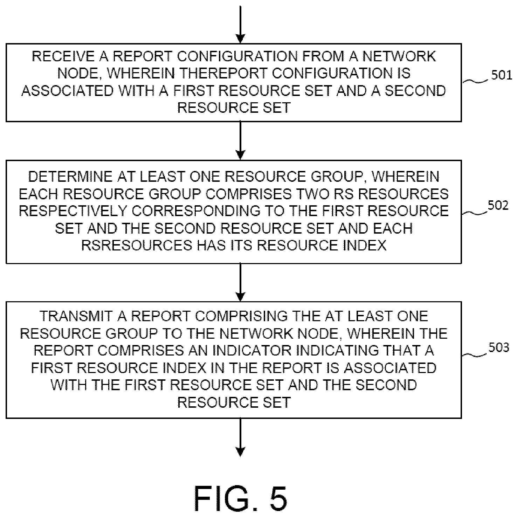

Figure 5 is a flow chart of a beam group reporting method in accordance with one novel aspect. In step 501, the UE 102 receives a report configuration from a network node, wherein the report configuration is associated with a first resource set and a second resource set.

In step 502, the UE 102 determines at least one resource group, wherein each resource group comprises two reference-signal (RS) resources respectively corresponding to the first resource set and the second resource set.

In step 503, the UE 102 transmits a report comprising the at least one resource group to the network node, wherein the report comprises an indicator indicating that a first resource index in the report is associated with the first resource set or the second resource set.

In accordance with one novel aspect, in the beam reporting method, in an event that the indicator corresponds to a first value, the first resource index in the report is associated with the first resource set, and in another event that the indicator corresponds to a second value, the first resource index in the report is associated with the second resource set.

In accordance with one novel aspect, the higher-layer signal further comprises one or more frequency hopping offset parameters. In the partial sounding method, the UE 102 may perform a frequency hopping in the fractional SRS resource according to the one or more frequency hopping offset parameters.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
receiving (501), by a user equipment (102), UE, a report configuration from a network node (101), wherein the report configuration is associated with a first resource set and a second resource set;
determining (502), by the UE (102), at least one resource group, wherein each resource group comprises two reference-signal, RS, resources respectively corresponding to the first resource set and the second resource set; and
transmitting (503), by the UE (102), a report comprising the at least one resource group to the network node (101), wherein the report further comprises an indicator indicating that a first resource index in the report is associated with the first resource set or the second resource set.

2. The method of Claim 1, wherein in an event that the indicator corresponds to a first value, the first resource index in the report is associated with the first resource set, and in another event that the indicator corresponds to a second value, the first resource index in the report is associated with the second resource set.

3. The method of Claim 1, wherein the first resource index in the report corresponds to the largest RSRP value or SINR value in the report.

4. The method of Claim 3, wherein a resource index other than the first resource index in the report corresponds to a corresponding differential value based on the largest RSRP value or SINR value.

5. The method of Claim 1, wherein in an event that a periodic or semi-persistent resource configuration is associated with the report configuration, at least one resource set list in the periodic or semi-persistent resource configuration indicates a first resource set ID and a second resource set ID respectively corresponding to the first resource set and the second resource set.

6. The method of Claim 1, wherein the report configuration is associated with a report trigger state configuration, and the report trigger state configuration indicates a first index and a second index respectively corresponding to the first resource set and the second resource set.

7. The method of Claim 1, wherein the UE (102) is capable to simultaneously receive the RS resources in each resource group.

8. The method of Claim 1, wherein in the report, a reporting order associated with one resource group other than the resource group including the first resource index in the report is that the resource index associated with the first resource set is reported first, and then the resource index associated with the second resource set is reported.

9. The method of Claim 1, wherein in the report, a reporting order associated with one resource group other than the resource group including the first resource index is that the resource index associated with a smaller resource set ID is reported first, and then the resource index associated with a larger resource set ID is reported.

10. The method of Claim 1, wherein in the report, a reporting order associated with one resource group other than the resource group including the first resource index follows the reporting order associated with the resource group including the first resource index.

11. A user equipment (102), UE, comprising:
a receiver (132), receiving a report configuration from a network node (101), wherein the report configuration is associated with a first resource set and a second resource set;
a processor (133), determining at least one resource group, wherein each resource group comprises two reference-signal, RS, resources respectively corresponding to the first resource set and the second resource set; and
a transmitter (132), transmitting a report comprising the at least one resource group to the network node (101), wherein the report further comprises an indicator indicating that a first resource index in the report is associated with the first resource set or the second resource set.

12. The UE (102) of Claim 11, wherein in an event that the indicator corresponds to a first value, the first resource index in the report is associated with the first resource set, and in another event that the indicator corresponds to a second value, the first resource index in the report is associated with the second resource set.

13. The UE (102) of Claim 11, wherein the first resource index in the report corresponds to the largest RSRP value or SINR value in the report.

14. The UE (102) of Claim 13, wherein a resource index other than the first resource index in the report corresponds to a corresponding differential value based on the largest RSRP value or SINR value.

15. The UE (102) of Claim 11, wherein in an event that a periodic or semi-persistent resource configuration is associated with the report configuration, at least one resource set list in the periodic or semi-persistent resource configuration indicates a first resource set ID and a second resource set ID respectively corresponding to the first resource set and the second resource set.
